## Europäisches Patentamt

## European Patent Office

## Office européen des brevets

(11) Publication number: **0 170 136**
**B1**

## EUROPEAN PATENT SPECIFICATION

(45) Date of publication of patent specification: **03.10.90**

(51) Int. Cl.⁵: **B 41 J 2/07**

(21) Application number: **85108746.0**

(22) Date of filing: **12.07.85**

(54) Method and apparatus for controlling ink-jet color printing heads.

(30) Priority: **02.08.84 US 637143**

(43) Date of publication of application:
**05.02.86 Bulletin 86/06**

(45) Publication of the grant of the patent:
**03.10.90 Bulletin 90/40**

(84) Designated Contracting States:
**AT BE CH DE FR GB IT LI LU NL SE**

(56) References cited:
**US-A-4 032 978**
**US-A-4 084 259**
**US-A-4 367 482**

(73) Proprietor: **METROMEDIA COMPANY**
**One Harmon Plaza**
**Secaucus, New Jersey (US)**

(72) Inventor: **Logan, David J.**
**125 Karen Lee Road**
**Glastonbury, Connecticut 06033 (US)**

(74) Representative: **Schaumburg, Thoenes &**
**Englaender**
**Mauerkircherstrasse 31 Postfach 86 07 48**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a method and apparatus for controlling an ink jet printing means according to the generic part of claims 1 and 9, respectively.

The printing or similar generation of halftone colored graphics or displays using variable diameter dots of different primary colors is generally well understood in the printing art. One method commonly used to produce such graphics is that of generating for each of the different primary colors a series of variable diameter dots precisely spaced from one another by a set of screens to print a constant dot placement pattern onto the receiving surface. A printed color reproduction produced by this method generally consists of superimposing the number of different primary colors used of individual images where each of these images varies in density according to the dot size. The saturation (colorfulness) of tone value of a given primary color and density, which is related to the light-reflecting properties of the individual images and is a measure of how dark a color appears, are a function of the percentage area of the receiving surface covered by the dots and are controlled by regulating the size of the dots applied.

The generation of halftone colored graphics using the aforementioned method is generally not practical where dots are applied to dot positions in a matrix format of pixel areas of a receiving surface by ink-jet printing heads nor generally satisfactory in some cases, such as, for example, where the size or diameter of the dot to be applied cannot be varied.

Another problem often encountered with the production of color graphics is the appearance of repeating or moire patterns in the finished halftone color graphic due to the interaction of the dot patterns of the individual screens. Moire patterns also often appear in the finished graphics when dots comprising a halftone of desired hue and saturation level are arranged in the same dot pattern pixel to pixel.

U.S. Patent No. 4,367,482 to Heinzl, issued January 4, 1983 discloses a method for producing polychromatic halftone images by printing equal sized dots of different primary colors with each color having a fixed, prescribed pattern of dot placement for each saturation level.

The method of producing halftone pixels described by Heinzl is generally unsatisfactory in applications where the recording medium receiving surface may be subject to vibration or other such erratic movement as the medium moves past a dot applying section so that the printing of the dots within a pixel and adjacent pixels cannot generally be accurately controlled to produce the desired receiving surface coverage.

US—A—4,084,259 (Cahill) (base for the preambles of claims 1 and 9) teaches a method and apparatus as mentioned above and discloses selection of matrix patterns from matrix groups contained within four sets A, B, C, and D. The selection of matrix from one of the matrix groups is based on the optical density and as explained at column 7, lines 16—27, the selection of the matrix groups is done in a predetermined sequence to avoid patterning effects. Accordingly, Cahill contemplates selected matrix patterns within given matrix groups.

Cahill further discloses at column 2, lines 44—51, the selection of bits from the same bit pattern in accordance with a predetermined sequence and which sequence continues until all bits within the bit pattern have been selected. As Cahill indicates, if there are more adjacent points having optical densities calling for bit selection from the same bit pattern, then the sequence is repeated.

Cahill further provides that there are at least two bit pattern strings for alternate usage in printing of even and odd numbered lines. This is necessary in this method since it is important to Cahill to enable a comparison of the optical density at any point within a line with the optical density at adjacent points and lines immediately above and below the line of interest. This is clear from a reading of column 8, lines 20—25. This method needs costly and complex memory systems, programs, or other intricate schemes to avoid patterning effects.

It is therefore a general aim of the present invention to provide a method and apparatus for producing polychromatic halftone pixels using ink-jet printing heads to apply color dots of substantially equal size to pixel areas to form color graphics which overcome the limitations and disadvantages of previously used methods and apparatus.

It is a further aim of the present invention to provide a method and apparatus for producing polychromatic halftone pixels which substantially eliminate the appearance of moire patterns in the finished color graphics by applying random dot patterns to adjacent pixel areas so that repetitive dot pattern placement from pixel area to pixel area is unlikely.

The present invention resides in an apparatus for controlling ink-jet printing means of the above-mentioned type characterized for use in a large scale graphic system by said density signals having any one of F integral values and by means (98) for randomly selecting one of said patterns from said tabular listing whenever a density signal of said one integral value appears, each of immediately adjacent pixel areas in a sequence of pixel areas for a given integral value being printed with a randomly selected pattern.

The invention further refers to a method for controlling an ink-jet printing means as mentioned above characterized for use in a large scale graphic system by said density signals having any one of F integral values and by randomly selecting one of said patterns from said tabular listing whenever a density signal of said one integral value appears, each of immediately adjacent pixel areas in a sequence of pixel areas for a given integral value being printed with a randomly selected pattern.

In accordance with the invention, a sequential series of image density signals is produced each representing the color tone value desired for a respective one of the pixel areas. The color image density signals may have any of F integral values. A tabular listing means provides, for at least one of the integral values which the density signals may take, a number of different patterns according to which dots may be arranged in the pixel area to produce the related tone value. Another means randomly selects one of said patterns from the tabular listing whenever a density signal of the one integral value appears. A further means operates the ink-jet printing means to apply dots onto the dot positions of the associated pixel area in the selected pattern.

Other features and advantages of the present invention will become readily apparent from the following written descriptions and the drawings forming a part thereof.

Fig. 1 shows a perspective view of a large-scale sign generating system having apparatus embodying the present invention for producing polychromatic halftone pixels.

Fig. 2 is an illustration of a pixel of the type associated with the system of Fig. 1.

Fig. 3 is a schematic front view of the dot applicator of Fig. 1 showing the arrangement of its ink-jet printing heads.

Fig. 4 is a functional block diagram including the major components of the system of Fig. 1.

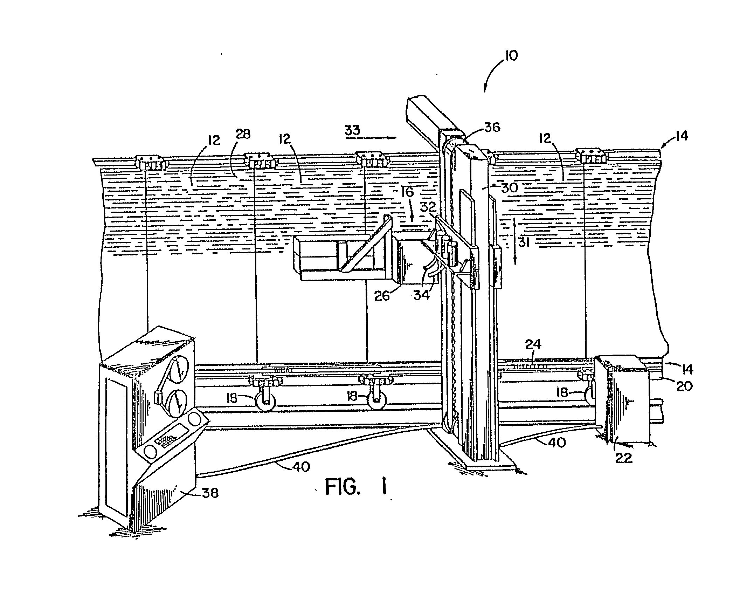

Referring now to the drawings, the method and apparatus of the present invention are shown by way of example as embodied in a large-scale sign generating system shown in perspective view on Fig. 1 and designated generally by the numeral 10. Such a system is illustrated and described in U.S. Patent Application No. 637151, filed concurrently herewith in the name of David J. Logan, Kenneth O. Wood, Thomas A. Gordon and John E. Ladue and entitled "Ink Jet Printing System" corresponding to EP—A—170 035.

Briefly, panels 12, 12 collectively providing a receiving surface 28 are mounted on an endless conveyor, designated generally at 14, for movement past a dot applying or printing section 16. The conveyor 14 includes wheels 18, 18 which follow a guide track 20. A drive means 22 has a pinion (not shown) which engages a rack 24 on the conveyor to drive it and the attached panels past the printing station 16 in the direction of the arrow 33.

At the printing station 16, color dot applicator means in the form of an ink-jet printing mechanism 26 is disposed in front of the panels 12, 12 and is driven vertically along an upright supporting column 30 by a driving means 36, as indicated by arrow 31, perpendicular to the direction of movement of the panels. A supply of suitable colored liquids such as, for example, pigmented inks, is provided to the printing mechanism 26 from a number of reservoirs 32, 32 by associated conduits 34, 34.

A computer 38 controls the drive means 36, the drive means 22 and the printing mechanism 26 via a cable 40 and causes the printing mechanism 26 to apply colored dots to the receiving surface 28 to produce a desired colored sign or other display.

The sign or display colors are produced by the well known three-color printing process. The color cyan, magenta and yellow result directly from the printing of those pigmented inks. The colors red, blue, green and black result from the overlay of the pigmented inks with red being produced from magenta and yellow; green from cyan and yellow; blue from magenta and cyan, and black from the overlay of all three. The other colors are produced by various combinations of the colors cyan, magenta, yellow and the background color of the receiving surface. Although the color black is producible as described above, it is preferable to produce the desired colors using the four-color printing process with black being the fourth color. Reference may be made to any number of textbooks on color theory such as, for example, J.A.C. Yule, Principles of Color Reproduction (1967) for a more detailed explanation of color generation the text of which is incorporated herein by reference.

In the system 10 shown in Fig. 1, the receiving surface 28 moves in a continuous motion past the printing station 16 while the printing mechanism 26 remains vertically stationary, and the printing mechanism is operated to print dots which appear on a line, or more precisely within a narrow band, extending horizontally or parallel to the direction of movement of the receiving surface. In accordance with the invention, and as explained in more detail below, the printing of the dots is controlled in a pixelwise manner wherein the printed line or band is taken to consist of a series of side-by-side pixels or small discrete areas of the receiving surface. At the completion of the printing of a line, the printing mechanism 26 moves downwardly a distance equal to the height of the line and the next line is then printed immediately adjacent to the previous one. A large number of such side-by-side lines form the finished sign or other display.

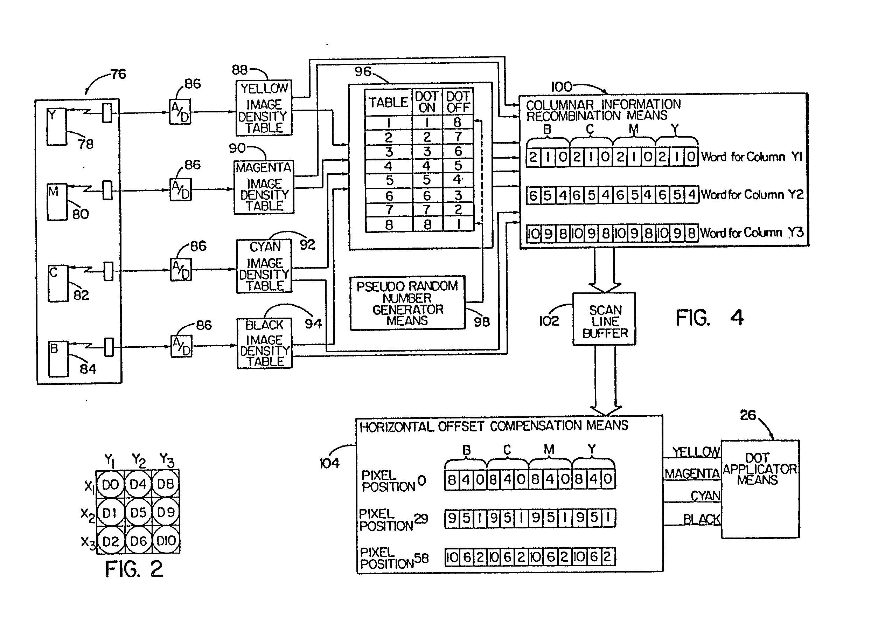

Referring to Fig. 2, a pixel of the type associated with the invention is made up of a plurality of dot positions in a matrix having "X" number of rows and "Y" number of columns, where each row is made up of "Y" dot positions and each column is made up of "X" dot positions where "X" and "Y" are integers.

The number of saturation levels or tone values of a pixel, for each color, is set by the number of dot positions in the pixel and the number of positions printed corresponds to the magnitude of a measured color image density as described in more detail in the discussion of Fig. 4 below. For example, the lowest color image density level may correspond to none of the dot positions being printed and the highest density level corresponds to all of the dot positions being printed with intermediate density levels each having a proportional number of dot positions printed. Thus, the number of saturation levels of a color in a pixel may be expressed as [(X×Y)+1] where X and Y are the number of rows and columns respectively.

In one actual construction of the system of Fig. 1, a pixel is made up of a 3×3 matrix; that is, each row contains three dot positions and each column contains three dot positions to form a pixel having nine dot positions and able to provide ten density levels.

Each pixel is about 2.54 mm (1/10 inch) by 2.54 mm (1/10 inch) in size making each square of the matrix have sides 0.85 mm (0.033 inches) long. A circle centred on the center of each square and having a diameter equal to one side of the square is taken to be a "dot position". The diameter of the colored dot applied to a dot position is made slightly larger than 0.85 mm (0.033 inches), for example 0.89 mm (0.035 inches), to maximize coverage of the receiving surface between the adjacent dot positions.

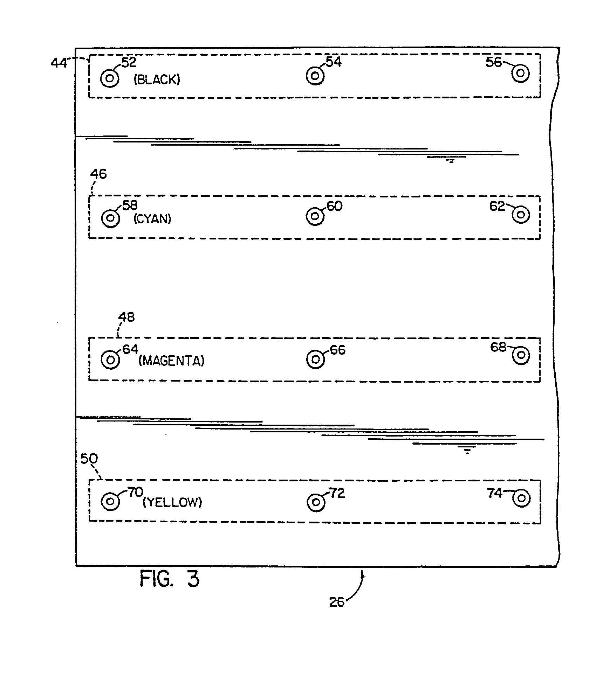

Referring to Fig. 3, a schematic front view of the color dot applicator means 26 which is used with the sign generating system 10 embodying the present invention is shown therein. The dot applicator 26 is comprised of four groups 44, 46, 48 and 50 of ink-jet printing heads and associated nozzles 52 to 74 for the four colors black, cyan, magenta and yellow, respectively. Each group is comprised of three ink-jet printing heads arranged side-by-side with each head being horizontally spaced from its neighboring head or heads of the group by an equal distance. Each printing head in a group is also vertically offset from its neighbors by a distance equal to the diameter of a dot position, so that a line passing through the centers of the printing head nozzles of a group is slightly inclined. The arrangement of ink-jet printing head nozzles 52 to 74 of the dot applicator means 26 shown in Fig. 3 is such that nozzles 56, 62, 68 and 74 apply dots to dot positions D0, D4, D8 of the pixel illustrated in Fig. 2; nozzles 54, 60, 66 and 72 apply dots to dot positions D1, D5, D9 and nozzles 52, 58, 64 and 70 apply dots to dot positions D2, D6, D10 respectively. Thus, a row of dots in a pixel is printed by a corresponding one ink-jet nozzle of a group as the receiving surface moves horizontally relative to the nozzle and a column of dots is printed by all the ink-jet nozzles of a group.

Still referring to Fig. 3, the four color groups 44, 46, 48 and 50 are arranged vertically with each group being spaced from its neighboring group or groups by an equal distance. A 5.1 cm (2 inch) vertical spacing between groups permits twenty lines of a given color to be printed before a line of the next adjacent color group is printed. The twenty line delay provides drying time for a color before it is overprinted.

Further considering the dot applicator 26 of Fig. 3, it would be desirable to vertically stack the ink-jet heads of a group so that the distance between neighboring ink-jet nozzles is equal to the diameter of a dot position. Such a vertical stacking arrangement would allow the nozzles of a group to apply dots to the dot positions of a pixel column when all the ink-jet heads are operated at the same time. However, the size of the ink-jet printing head imposes physical mounting constraints requiring horizontal and vertical spacing between neighboring heads to accommodate mounting and placement on the dot application mechanism 26. In the embodiment of the dot applicator of Fig. 3, neighbouring ink-jet printing head nozzles of a group are horizontally spaced 7.37 cm (2.9 inches) apart. The dots applied to dot positions of a given column for a given pixel when all the printing heads of a group are operated at the same time absent compensation for spacing are consequently printed at a spacing relative to a first dot printed in the column of 7.37 cm and 14.73 cm (2.9 and 5.8 inches) from the first dot rather than vertically in a column above and below one another.

As explained in greater detail hereinbelow, and in connection with the discussion of Fig. 4, data words representing columnar information for a given pixel are reconstructed to compensate for the horizontal offset of the printing heads. For example, if all the ink-jet printing heads for a given color group are operated at the same time, one dot is printed in dot direction X1Y1 of a pixel area being printed at a first pixel position on the receiving surface; one dot is printed in dot position X2Y1 of a pixel area being printed at a pixel position 7.37 cm (2.9 inches) or 29 pixel positions away from the first pixel position and one dot is printed in dot position X3Y1 of a pixel area being printed at a pixel position 14.73 cm (5.8 inches) or 58 pixel positions away from the first pixel position. After the receiving surface has moved past the dot applying station 16 a distance equal to the diameter of a dot position, the ink-jet printing heads are operated and a dot is applied in dot position X1Y2 of the pixel being printed at the first pixel position; one dot is printed in dot position X2Y2 of the pixel being printed at a pixel position 29 pixel positions away from the first pixel position and one dot is printed in dot position X3Y2 of the pixel being printed at a pixel position 58 pixel positions away from the first pixel position. The receiving surface is again moved a distance equal to a dot position and the ink-jet heads are operated to print a dot in dot positions X1Y3 of the first pixel position, X2Y3 of the pixel being printed at pixel position 29 and X3Y3 of the pixel being printed at pixel position 58. It will be seen that the receiving surface is moved a distance of 14.73 cm (5.8 inches) to fully print a given pixel area.

Turning now to Fig. 4, a block diagram partially in schematic form of the major components of the system of Fig. 1 are shown therein. The color image density information necessary to produce a color reproduction may be obtained in any of a number of ways known in the art. As shown in Fig. 4, a scanner indicated generally at 76 is used to determine the image density level of a given color by scanning a separation negative of the corresponding given color which has been suitably produced in a separate process. The separation negtives represent the image density level for the colors yellow, magenta, cyan and black and are indicated within the scanner 76 at 78, 80, 82 and 84, respectively. The scanner 76 operates in a conventional manner wherein a beam of light shines through a separation negative and generates an analog electrical signal representative of the color density at the scanning point. The analog signal is then transmitted to an analog-to-digital converter 86, 86 where the measured analog signal is converted to a digital signal.

In the present embodiment, the analog signal may be converted to one of 256 discrete values with 0 corresponding to no light passing through a separation negative at the scanning point and 255 corresponding to maximum light passing through a negative. The converted digital signal is then fed to a PROM look-up table 88, 90, 92 or 94 for the colors yellow, magenta, cyan and black, respectively to convert it to an image density signal. The image density signal may have any one of F integral values each representating the number of dots (of one color) needed in a matrix pixel to produce a corresponding measured image density. An image density signal from the look-up tables 88, 90, 92, 94 is fed to a tabular listing functional block 96 to select one of the tabular listings or tables contained within the tabular listing functional block corresponding to a one of the F integral values of the image density signal.

Tables are contained in function block 96 which represent the various combinations of dots on and dots off in a matrix pixel for one dot on, two dots on, three dots on and four dots on, and so forth through eight dots on. It will be seen that only four tables are needed to represent the various combinations of dots on and dots off if the tables representing one dot on through four dots on are complemented so that the complement of the four dots on table generates five dots on, the complement of the three dots on table generates six dots on and so forth. A dot is said to be on when its associated dot position is to be printed. The combinations of no dots printed and all dots printed are considered to be trivial and do not require a look-up table.

For example, a given image density signal may indicate that two dot positions are to be printed within a pixel to produce a corresponding measured image density of a given color. A table is selected from function block 96 corresponding to two dots being printed and seven dots being left blank. The table selected contains a listing of all the possible patterns according to which two dots may be printed within a nine dot pixel.

Each table within block 96 contains a plurality of nine bit words, each word being representative of one of a possible number of matrix pixel dot pattern configurations and each nine bit word listed in a dot pattern configuration table in block 96 is assigned a number. a pseudo-random generator means indicated at 98 provides a random number which is used as a table pointer to select one of the numbered nine bit words representative of one of the possible pixel dot pattern configurations stored in the table for the corresponding image density unless the density value is zero or nine in which case none of the tables are selected and the output from the image density table 88, 90, 92 or 94 is fed directly to a columnar information recombination means functional block 100 which is part of the computer 38. One word is so randomly chosen unless the density is zero or nine for each color so that four words are selected. The selected nine bit word for each color is outputted from an associated dot pattern table contained in block 96 to the columnar information recombination means 100. The recombination means 100 reforms the four nine bit words into new twelve bit words. Each new twelve bit word (three bits per byte, one byte for each of the four colors) is associated with a column Y1, Y2, Y3 of a matrix pixel and each bit position contains information indicating whether or not a dot of the color represented by that bit position is to be printed. The recombination means 100 contains three twelve bit words for the three column by three row matrix pixel used in the embodiment described herein.

The output of the recombination means 100 is fed to a scan line buffer memory 102 which stores sequentially a plurality of the twelve bit reformed words each containing the color information for an associated pixel column. Preferably, twenty lines of color information for each color are stored in the buffer means 102 to accommodate the 5.1 cm (2 inch) vertical spacing between color groups 44, 46, 48, 50 of the dot applicator means 26 as illustrated in Fig. 3.

As explained in hereinabove, the ink-jet printing heads for a given color group are not in vertical alignment but are rather spaced laterally. Still referring to Fig. 4, the twelve bit words containing the columnar dot printing information for each color in a given pixel is retrieved from the scan line buffer memory 102 by a horizontal offset compensation means 104, which is part of the computer 38, in such a way as to compensate for the lateral spacing of the ink-jet printing heads. Each new twelve bit word (3 bits per byte, one byte for each of the four colors) produced by the horizontal offset means 104 is associated with a row X1, X2, X3 of a matrix pixel and each bit position contains information indicating whether or not a dot of the color represented by that bit position is to be printed. The twelve bit words are used to control the operation the ink-jet printing heads in a color group to apply dots to dot positions in three different pixel positions as explanied hereinabove to compensate for the vertical and horizontal spacing between ink-jet printing heads in the color group. For example, for a given color group one word contains control information to operate the top printing head of a group to print row X1 in pixel position 0, a second word contains control information for the middle printing head of the group to print row X2 in pixel position 29, and a third word contains control information for the bottom printing head of the group to print row X3 in pixel position 58. Therefore, the dot pattern information for a given color is offset laterally 87 and 174 dots (29 and 58 pixel positions) respectively from a dot printed by the top ink-jet printing head nozzle of a group so that all the printing heads operate simultaneously to apply dots onto the receiving surface to form the desired display.

Apparatus for controlling a group of ink-jet printing heads to produce polychromatic halftone pixels by applying dots of substantially equal size in random dot patterns to pixel areas of a receiving surface to generate color graphics wherein the appearance of morie patterns is substantially eliminated has been described in a preferred embodiment. It will be understood that numerous modifications and substitutions, such as, for example, the number of different primary colors used to produce a color of desired hue and saturation or the number of dot positions comprising a pixel area may be made without departing from the scope of the invention. Therefore, the invention has been described by way of illustration rather than limitation.

**Claims**

1. Apparatus for controlling an ink-jet printing means (16) to apply dots of one color and of substantially fixed size to a plurality of pixel areas located sequentially along a line scanned by said printing means and within each of which pixel areas, potential dot positions form an array identical for all pixel areas, said apparatus comprising:

means (76, 86, 88, 90, 92, 94) for producing a sequential series of image density signals each representative of the color tone value at which a respective one of said pixel areas is to be printed by dots of said one color;

means (96) for providing, for at least one of the values which said density signals may take, a tabular listing of a number of different patterns according to which dots may be arranged in a pixel area to produce the tone value corresponding to the color image density signal of such value;

means (26) for operating said ink-jet printing means to apply dots onto the dot positions of the associated pixel area in the pattern selected from said tabular listing characterized for use in a large scale graphic system by said density signals having any one of F integral values and by means (98) for randomly selecting one of said patterns from said tabular listing whenever a density signal of said one integral value appears, each of immediately adjacent pixel areas in a sequence of pixel areas for a given integral value being printed with a randomly selected pattern.

2. Apparatus for controlling an ink-jet printing means (16) as defined in claim 1 further characterized by the potential dot position array for each pixel area being one where the dot positions are arranged by columns and rows.

3. Apparatus for controlling an ink-jet printing means (16) as defined in claim 2 further characterized by said ink-jet means having a number of ink-jet heads (52, 54, 56, 60, 62, 64, 66, 68, 70, 72, 74) equal to the number of dot positions in each column.

4. Apparatus for controlling an ink-jet printing means (16) as defined in claim 1 further characterized by a tabular listing of all possible dot patterns being provided for each of the F integral values other than the one representing the printing of no dots and the one representing the printing of all dots.

5. Apparatus for controlling an ink-jet printing means (16) as defined in claim 1 further characterized by the printing of at least one other color with the same randomizing means (98) being used to select a different one of said patterns from said tabular listing for each of the pixel areas to be printed by said other color.

6. Apparatus for controlling an ink-jet printing means (16) as defined in claim 2 further characterized in that said F integral values range between 1 and $[(X \times Y)+1]$ where X represents the number of said rows and Y represents the number of said columns.

7. Apparatus for controlling an ink-jet printing means (16) as defined in claim 1 further characterized by said dot pattern tabular listing means (96) includes memory means having a plurality of addressable storage locations, each storage location containing one of a number of the different dot pattern arrangements being represented as a binary coded digital word with each bit position of the word corresponding to one of the dot positions of a pixel area.

8. Apparatus for controlling an ink-jet printing means (16) as defined in claim 7 further characterized in that said pattern random selection means (98) includes means for randomly generating a plurality of numbers each number associated with one of said memory means (96) addressable storage locations and means for selecting a said one storage location corresponding to a said one random number.

9. A method for controlling an ink-jet printing means for applying dots of one color and of substantially fixed size to a plurality of pixel areas located sequentially along a line scanned by said printing means, said method comprising the steps of:

producing a sequential series of image density signals each representative of the color tone value at which a respective one of said pixel areas is to be printed by dots of said one color, providing for at least one of the values which said density signals may take, a tabular listing of a number of different patterns according to which dots may be arranged in a pixel area to produce the tone value corresponding to the color image density signal of such value;

operating said ink-jet printing means to apply dots in the pattern selected from said tabular listing onto the dot positions of the associated pixel area in the sequence of pixel areas to be printed, characterized for use in a large scale graphic system by said density signals having any one of F integral values and by randomly selecting one of said patterns from said tabular listing whenever a density signal of said one integral value appears, each of immediately adjacent pixel areas in a sequence of pixel areas for a given integral value being printed with a randomly selected pattern.

10. A method for controlling an ink-jet printing means (16) as defined in claim 9 further characterized by the step of printing at least one other color by randomly selecting one of said patterns from said tabular listing (96) for each of the pixel areas to be printed whenever a density signal of said one integral value appears for said other color.

### Patentansprüche

1. Vorrichtung zur Steuerung einer Tintenstrahldruckvorrichtung (16) zum Aufbringen von Punkten einer Farbe und einer im wesentlichen feststehenden Größe auf eine Vielzahl von Pixelbereichen, die sequentiell entlang einer von der Druckeinrichtung abgetasteten Linie angeordnet sind, wobei innerhalb jedes dieser Pixelbereiche mögliche Punktpositionen eine für alle Pixelbereiche indentische Anordnung bilden und wobei die Vorrichtung umfaßt;

—Mittel (76, 86, 88, 90, 92, 94) zum Erzeugen einer sequentiellen Reihe von Bilddichtesignalen, von denen jedes repräsentativ für einen Farbtonwert ist, mit dem ein entsprechender Pixelbereich durch Punkte dieser einen Farbe gedruckt werden soll;

—Mittel (96) zum Vorsehen für mindestens einen der Werte, welche die Dichtesignale annehmen können, einer Tabelle einer Anzahl verschiedener Muster, zu denen die Punkte innerhalb eines Pixelbereichs angeordnet werden können, um den Tonwert zu erzeugen, der dem Farbbilddichtesignal dieses Wertes entspricht;

—Mittel (26) zur Betätigung der Trintenstrahldruckeinrichtung zum Aufbringen von Punkten auf die Punktpositionen des zugehörigen Pixelbereiches in dem Muster, das aus der Tabelle ausgewählt wurde, dadurch gekennzeichnet, daß für die Verwendung in einem System für großformatige Graphiken die Dichtesignale irgendeinen von F ganzzahligen Werten haben, und daß Mittel (98) vorgesehen sind zur zufallsbestimmten Auswahl eines der Muster aus der Tabelle, wann immer ein Dichtesignal dieses einen ganzzahligen Wertes auftritt, wobei jeder der unmittelbar anschließenden Pixelbereiche in einer Reihe von Pixelbereichen für einen gegebenen ganzzahligen Wert mit einem gemäß einer Zufallsverteilung ausgewälten Muster gedruckt wird.

2. Vorrichtung zur Steuerung einer Tintenstrahldruckeinrichtung (16) nach Anspruch 1, ferner dadurch gekennzeichnet, daß die Anordnung möglicher Punktpositionen für jeden Pixelbereich eine solche ist, bei der die Punktpositionen in Spalten und Zeilen angeordnet sind.

3. Vorrichtung zur Steuerung einer Tintenstrahldruckeinrichtung (16) nach Anspruch 2, ferner dadurch gekennzeichnet, daß die Tintenstrahleinrichtung eine Anzahl von Tintenstrahlköpfen (52, 54, 56, 60, 62, 64, 66, 68, 70, 72, 74) hat, die gleich der Anzahl von Punktpositionen in jeder Spalte ist.

4. Vorrichtung zur Steuerung einer Tintenstrahldruckeinrichtung (16) nach Anspruch 1, ferner dadurch gekennzeichnet, daß eine Tabelle aller möglichen Punktmuster für jeden der F ganzzahligen Werte vorgesehen ist, die von dem das Drucken keiner Punkte repräsentierenden und von dem das Drucken aller Punkte repräsentierenden verschieden sind.

5. Vorrichtung zur Steuerung einer Tintenstrahldruckeinrichtung (16) nach Anspruch 1, ferner gekennzeichnet durch das Drucken mit mindestens einer anderen Farbe mit Hilfe derselben Zufallseinrichtung (98), die verwendet wird, um ein anderes de genannten Muster aus der Liste für jeden der mit der anderen Farbe zu druckenden Pixelbereiche auszuwählen.

6. Vorrichtung zur Steuerung einer Tintenstrahldruckeinrichtung (16) nach Anspruch 2, ferner dadurch gekennzeichnet, daß die F ganzzahligen Werte in einem Bereich zwischen 1 und $[(X \times Y)+1]$ liegen, wobei X die Anzahl der Zeilen und Y die Anzahl der Spalten bezeichnen.

7. Vorrichtung zur Steuerung einer Tintenstrahldruckeinrichtung (16) nach Anspruch 1, ferner dadurch gekennzeichnet, daß die Liste von Punktmustern eine Speichereinrichtung einschließt mit einer Vielzahl von adressierbaren Speicherstellen, wobei jede Speicherstelle eine aus einer Anzahl der unterschiedlichen Punktmusteranordnungen enthält, die in Form binär codierter digitaler Worte dargestellt werden, wobei jede Bitposition des Wortes einer der Punktpositionen eines Pixelbereiches entspricht.

8. Vorrichtung zur Steuerung einer Tintenstrahldruckeinrichtung (16) gemäß Anspruch 7, ferner dadurch gekennzeichnet, daß die Zufallswahleinrichtung (98) zur Auswahl der Muster Mittel zur zufallsbedingten Erzeugung einer Vielzahl von Zahlen enthält, wobei jede Zahl einer der Speicheranordnungen (96) addressierbarer Speicherstellen zugeordnet ist, und ferner Mittel zur Auswahl einer Speicherstelle enthält, die einer dieser Zufallszahlen entspricht.

9. Verfahren zur Steuerung einer Tintenstrahldruckeinrichtung zum Aufbringen von Punkten einer Farbe und von im wesentlichen festbleibender Größe auf eine Vielzahl von Pixelbereichen, die sequentiell entlang einer von der Druckeinrichtung abgetasteten Linie angeordnet sind, wobei das Verfahren die Schritte umfaßt:

—Erzeugen einer sequentiellen Reihe von Bilddichtesignalen, von denen jedes den Farbtonwert repräsentiert, bei dem ein bestimmter dieser Pixelbereiche durch Punkte einer Farne bedruckt werden soll, Vorsehen für mindestens einen dieser Werte, welche die Dichtesignale annehmen können, von einer Tabelle mit einer Anzahl verschiedener Muster, entsprechend denen die Punkte innerhalb eines Pixelbereiches angeordnet werden können, um den Farbtonwert zu erzeugen, welcher dem Farbbilddichtesignal dieses Wertes entspricht;

—Bestätigen der Tintenstrahldruckeinrichtung, um Punkte in dem aus der Tabelle gewählten Muster auf die Punktpositionen in dem zugeordneten Pixelbereich in der Reihe von zu druckenden Pixelbereichen aufzubringen, dadurch gekennzeichnet, daß bei einer Verwendung in einem System für großformatige Graphiken die Dichtesignale einen von F ganzzahligen Werten annehmen und daß eines der Muster aus der Liste zufallsbedingt ausgewählt wird, wann immer ein Dichtesignal dieses einen ganzzahligen Wertes auftritt, wobei jeder der unmittelbar anschließenden Pixelbereiche in einer Reihe von Pixelbereichen für einen gegebenen ganzzahligen Wert mit einem zufallsbedingt ausgewählten Muster bedruckt wird.

10. Verfahren zur Steuerung einer Tintenstrahldruckeinrichtung (16) nach Anspruch 9, ferner gekennzeichnet durch den Schritt des Druckens mindestens einer anderen Farbe, indem in jedem der zu druckenden Pixelbereiche eines der Muster and der Tabelle (96) zufallsbedingt ausgewählt wird, wann immer ein Dichtesignal des einen ganzzahligen Wertes für die andere Farbe auftritt.

**Revendications**

1. Appareil pour commander un moyen (16) d'impression par jets d'encre afin d'appliquer des points d'une coleur et d'une taille substantiellement constante à une pluralité de surfaces de pixel situées séquentiellement le long d'une ligne balayée par ce moyen d'impression et, à l'intérieur de chacune des surfaces de pixel, des positions potentielles de points composant un arrangement indentique pour toutes les surfaces de pixel, cet appareil comprenant:

—des moyens (76, 86, 88, 90, 92, 94) pour produire une série séquentielle de signaux de densité d'image représentatifs chacun de la valeur du ton d'une couleur selon laquelle une surface de pixel correspondante des surfaces du pixel est à imprimer par des points de cette couleur;

—un moyen (96) pour fournir, pour l'une au moins des valeurs que lesdits signaux de densité peuvent prendre, une liste tabulaire d'une pluralité de configurations différentes selon lesquelles les points peuvent être disposés sur une surface de pixel pour produire la valeur du ton qui correspond au signal de densité d'image colorée ayant ladite valeur,

—un moyen (26) pour manoeuvrer le moyen d'impression par jets d'encre afin d'appliquer des points sur les positions de point de la surface de pixel associée à la configuration sélectionnée de la liste tabulaire, caractérisé, pour l'emploi dans un système graphique à grande échelle, par lesdits signaux de densité ayant l'une quelconque des valeurs intégrales F et par un moyen (98) pour prendre au hasard l'une desdites configurations de la liste tabulaire chaque fois qu'un signal de densité de ladite valeur intégrale apparaît, chacune des surfaces de pixel immédiatement voisines d'une séquence de surfaces de pixel étant imprimée pour une valeur intégrale donnée selon une configuration prise au hasard.

2. Appareil pour commander un moyen (16) d'impression par jets d'encre tel que défini à la revendication 1, caractérisé en outre par l'arrangement des positions potentielles de points pour chaque surface de pixel qui est un arrangement selon lequel les positions des points sont disposées par colonnes et par rangées.

3. Appareil pour commander un moyen (16) d'impression par jets d'encre tel que défini à la revendication 2, caractérisé en outre per ce moyen à jets d'encre qui a un nombre de têtes à jets d'encre (52, 54, 56, 60, 62, 64, 66, 68, 70, 72, 74) égal au nombre des positions de points dans chaque colonne.

4. Appareil pour commander un moyen (16) d'impression par jets d'encre tel que défini à la revendication 1, caractérisé en outre par un liste tabulaire de toutes les configurations possibles de points prévues pour chacune des valeurs intégrales F autres que celle signifiant l'absence de toute impression de point et que celle signifiant l'impression de tous les points.

5. Appareil pour commander un moyen (16) d'impression par jets d'encre tel que défini à la revendication 1, caractérisé en outre par l'impression d'au moins une autre couleur par le même moyen (98) prenant au hasard, utilisé pour sélectionner une configuration différente desdites configurations de la liste tabulaire pour chacune des surfaces de pixel à imprimer avec ladite autre couleur.

6. Appareil pour commander un moyen (16) d'impression par jets d'encre tel que défini à la revendication 2, caractérisé en outre en ce que les valeurs intégrales F se situent entre 1 et $[(X \times Y) + 1]$ où X représente le nombre des rangées et Y représente le nombre des colonnes.

7. Appareil pour commander un moyen (16) d'impression par jets d'encre tel que défini à la revendication 1, caractérisé en ce que le moyen (96) fournissant la liste tabulaire des configurations de points comprend des mémoires ayant une pluralité d'emplacements adressables de mémorisation, chaque emplacement de mémorisation contenant un arrangement d'un nombre d'arrangements différents de configurations de points qui est représenté par un mot numérique à codage binaire avec chaque chiffre binaire de mot correspondant à l'une des positions des points d'une surface de pixel.

8. Appareil pour commander un moyen (16) d'impression par jets d'encre tel que défini à la revendication 7, caractérisé en outre en ce que le moyen (98) de prise au hasard d'un configuration comprend un moyen pour créer au hasard une pluralité de nombres, chaque nomber étant associé à l'un desdits emplacements adressables de mémorisation des mémoires (96) et un moyen pour sélectionner l'emplacement de mémorisation correspondant audit nombre choisi au hasard.

9. Procédé pour commander un moyen d'impression per jets d'encre afin d'appliquer des points d'une couleur et d'une taille substantiellement constante à une pluralité de surfaces de pixel situées séquentiellement le long d'une ligne balayée par ce moyen d'impression, ce procédé comprenant les opérations de:

—produire une série séquentielle de signaux de densité d'image représentatifs chacun de la valeur du ton d'une couleur selon laquelle une surface correspondante des surfaces de pixel est à imprimer par des points de ladite couleur, fournir pour l'une au moins des valeurs que les signaux de densité peuvent prendre une liste tabulaire d'un nombre de configurations différentes selon lesquelles les points peuvent être arrangés sur la surface d'un pixel pour produire une valeur de ton qui correspond au signal de densité d'image colorée d'une telle valeur,

—manoeuvrer ledit moyen d'impression par jets d'encre pour appliquer des points selon la configuration choisie de la liste tabulaire sur les positions de points de la surface de pixel correspondante dans la séquence des surfaces de pixel à imprimer, caractérisé, pour l'emploi dans un système graphique à grande échelle, par lesdits signaux de densité qui ont l'une quelconque de valeurs intégrales F et par la prise au hasard de l'une desdites configurations de la liste tabulaire chaque fois qu'un signal de densité de ladite valeur intégrale apparaît, chacune des surfaces de pixel directement voisines dans une séquence de surfaces de pixel étant imprimée pour une valeur intégrale donnée selon une configuration prise au hasard.

10. Procédé pour commander un moyen (16) d'impression par jets d'encre tel que défini à la revendication 9, caractérisé en outre par l'opération d'imprimer au moins une autre couleur par la prise au hasard de l'une desdites configurations de la liste tabulaire (96) pour chacune des surfaces de pixel à imprimer chaque fois qu'un signal de densité de ladite valeur intégrale apparaît pour cette autre couleur.

FIG. 1

EP 0 170 136 B1

FIG. 4

FIG. 2

44

52
(BLACK)

54

56

46

58
(CYAN)

60

62

48

64
(MAGENTA)

66

68

50

70
(YELLOW)

72

74

FIG. 3

26